# EUROPÄISCHE PATENTSCHRIFT

(11) **EP 3 258 335 B1**
(45) Veröffentlichungstag und Bekanntmachung des Hinweises auf die Patenterteilung: **17.03.2021**
(21) Anmeldenummer: 17175027.6
(22) Anmeldetag: 08.06.2017
(51) Int. Cl.: G05D 1/00, G05D 1/02

(54) **TEACH-IN VORRICHTUNG UND VERFAHREN ZUM STEUERN EINES REINIGUNGSROBOTERS**
TEACH-IN DEVICE AND METHOD FOR CONTROLLING A ROBOT CLEANER
DISPOSITIF D'APPRENTISSAGE ET PROCÉDÉ DE COMMANDE D'UN ROBOT DE NETTOYAGE

(30) Priorität: 13.06.2016 DE 102016210422
(43) Veröffentlichungstag der Anmeldung: 20.12.2017
(73) Patentinhaber: BSH Hausgeräte GmbH, 81739 München (DE)
(72) Erfinder: KÜHNEL, Markus, 97616 Bad Neustadt (DE)

(56) Entgegenhaltungen:
- CN-Y- 2 601 426
- KR-A- 20120 087 608
- US-A1- 2007 271 011
- US-B1- 6 390 641

## Beschreibung

### Gebiet der Erfindung

Die Erfindung betrifft eine Vorrichtung gemäß Anspruch 1 sowie ein System gemäß Anspruch 9 und ein Verfahren gemäß Anspruch 15 zum Programmieren und Steuern eines Reinigungsroboters in Abhängigkeit eines von der Vorrichtung abgegrenzten Bereichs einer zu reinigenden Fläche und/oder eines Bodenbelags.

### Hintergrund der Erfindung

Reinigungsroboter, die Flächen abfahren und dabei absaugen, sind seit längerem bekannt. Solche Reinigungsroboter, sind in der Lage, komplex gestaltete Flächen abzufahren Dabei ist es wünschenswert, dass sie möglichst wenige Flächenteile mehrfach überfahren. Gegenstände, die dem Reinigungsroboter im Wege stehen, werden von diesem möglichst dicht umfahren, ohne den Gegenstand zu berühren oder diesen zu beschädigen. Herkömmliche Reinigungsroboter, wie sie im Heimbereich verwendet werden, weisen ein Ansaugsystem unterhalb oder seitlich vom Roboter auf, das von einem Motor angetrieben wird, sowie eine Staubabscheidekammer und einen nachgeschalteten Abluftfilter zum Austritt der angesaugten gereinigten Luft.

Darüber hinaus verfügt ein Reinigungsroboter über einen Motor zur Fortbewegung und Lenkung auf der zu reinigenden Fläche. Ferner verfügt ein solcher Reinigungsroboter über diverse Sensoren, mit deren Hilfe er Hindernisse erkennt und/oder mit deren Hilfe er sich innerhalb eines Raumes orientieren und auf diese Weise beim autonomen Fortbewegen navigieren kann.

Die Steuerung erfolgt mittels einer dem Reinigungsroboter zugeordneten Verarbeitungseinheit, die mittels vorgegebenen Algorithmen eine Flächenbearbeitung und Orientierung im Raum ermöglicht. Die Qualität der Flächenbearbeitung hängt somit im Wesentlichen von der Qualität der Algorithmen und der Qualität der Sensoren ab, die der Reinigungsroboter verwendet. Dabei ist es von Bedeutung, dass der Reinigungsroboter erkennt oder ihm beigebracht werden kann, welche Bereiche speziell behandelt werden sollen, in anderen Worten, welche Bereiche nicht angefahren werden sollen, welche Bereiche besonders intensiv gereinigt werden müssen und in welchen Bereichen Hindernisse vorliegen, denen der Reinigungsroboter besondere Aufmerksamkeit schenken muss. Dazu gehören beispielsweise Stufen, die, wenn sie nicht erkannt werden, ein unüberwindbares Hindernis darstellen können oder dazu führen, dass sich der Reinigungsroboter festfährt oder navigationsunfähig wird.

Die zur Erfüllung der Reinigungsaufgaben benötigte Rechenleistung kann je nach Technologie und Einsatzziel sehr aufwändig und teuer werden, da dazu kostspielige Micro-Prozessoren verwendet werden müssen und der Reinigungsroboter mit einer komplexen Software ausgestattet werden muss. Damit kann sichergestellt werden, dass sich der Reinigungsroboter auch auf Flächen zurechtfindet, auf denen kurzfristig ihm noch unbekannte Gegenstände oder Hindernisse wie Möbelstücke oder Spielzeug begegnen, die er umfahren muss. Ein Reinigungsroboter sollte demnach in der Lage sein, sich ständig neuen Anforderungen anzupassen, um Flächen- beziehungsweise Bereichsänderungen der zu reinigenden Fläche entsprechend Rechnung tragen zu können. Dadurch, dass die notwendige Intelligenz und Sensorik im Reinigungsroboter integriert werden muss, nimmt auch die Größe des Reinigungsroboters selbst zu, was wiederum zu Einschränkungen bei der Verwendung des Reinigungsroboters führt, da dieser aufgrund seiner Größe nicht mehr alle Bereiche der zu reinigenden Fläche anfahren kann. Somit haben sich herkömmliche Konzepte als ungenügend oder zu teuer erwiesen, was bis heute einer breiten Durchsetzung von Reinigungsrobotern auf dem Markt entgegensteht.

Um bei herkömmlichen Reinigungsrobotern Bereiche abzugrenzen, die nicht angefahren werden sollen, gibt es aktuell diverse technische Möglichkeiten, wie beispielsweise Magnetstreifen oder Infrarot-Leuchttürme, die wie virtuelle Wände zur Eingrenzung oder Abgrenzung eines Wirkungsbereichs des Reinigungsroboters funktionieren. Des Weiteren sind spezielle Teppiche bekannt, deren Boden schlecht reflektierend ist, um von speziellen Sensoren als Absturz erkannt oder eingestuft zu werden und dadurch den Wirkungsbereich des Reinigungsroboters einschränken.

Darüber hinaus können herkömmliche Reinigungsroboter mit vorstehend genannten Hilfsmitteln "eingesperrt" werden, um eingegrenzte Bereiche besonders intensiv zu reinigen. Einige der Reinigungsroboter bieten eine so genannte "Spot-Reinigung" dafür an, die bisher jedoch nur um den aktuellen Roboterstandort gestartet werden kann. Andere Lösungen erlauben es eine Spot-Reinigung über eine App mit Hilfe eines Tablets einzugeben. Die vorstehend genannten Lösungen zur Eingrenzung des Wirkungsbereichs des Reinigungsroboters sind arbeitsaufwändig, umständlich und damit teuer in der Anschaffung und Wartung. Darüber hinaus nehmen die oben genannten Eingrenzungsmittel auch selbst Raum in Anspruch, sowohl bei ihrer Verwendung als auch danach, wenn sie verstaut oder gelagert werden müssen.

In der Druckschrift DE 10 2009 059 215 A1 wird eine Möglichkeit offenbart, mit welcher der Benutzer einem Gerät eine Stelle in der Wohnung oder in einem Raum mit einem optischen Signal, beispielsweise in Form eines Lichtstrahls, weiter beispielsweise mittels eines Laser-Pointers zeigt, woraufhin das Gerät zu dieser Position verfährt oder sich diese Position merkt und gegebenenfalls zeitversetzt an diese Position verfährt. Das Gerät weist ein lichtempfindliches Bauteil auf, wobei die Zielführung mittels eines Lichtstrahls einer Lichtquelle vorgenommen wird, der auf einen vom Gerät entfernten Bereich des Bodens gerichtet wird, wobei reflektierte Anteile des Lichtes von dem Gerät zur Zielführung verarbeitet werden.

Eine weitere Lösung wird in der Druckschrift EP 1 515 210 A2 offenbart, bei der auch mittels eines Laser-Pointers eine Lichtspur bzw. Eckpunkte eines zu reinigenden Bodenbereichs abgegrenzt werden. Anhand von reflektierenden Anteilen des LaserStrahles, die an einen Empfänger einer Steuerungseinheit eines Reinigungsroboters übermittelt werden, kann der Reinigungsroboter den zu reinigenden Boden orten.

Des Weiteren ist aus der Druckschrift US 2007 / 0 271 011 A1 eine Vorrichtung sowie ein Verfahren bekannt, bei dem unter Verwendung nur eines Beacons, d. h., auf Deutsch einer Funkbacke bzw. eines Funkfeuers, ein Reinigungsroboter sich innerhalb eines geschlossenen Raumes orientieren kann. Herkömmlichen Lösungen benötigen zur Ermittlung der Position des Reinigungsroboters gleichzeitig mehrere Beacons. Die Druckschrift zeigt, wie eine Karte eines abgegrenzten Raums aufgezeichnet werden kann. Dabei weist der Reinigungsroboter eine Transporteinheit für das Beacon auf, mit der es das Beacon an unterschiedliche feste Orte bewegt, von denen aus der Reinigungsroboter unter Berücksichtigung der Lage des Beacons eine Karte erstellt. Dabei muss das Beacon von dem Reinigungsroboter so oft umgestellt werden, bis der Reinigungsroboter eine geschlossene Umfangslinie des abgegrenzten Raums ermittelt.

Zur Vereinfachung einer Eingabe offenbart das Gebrauchsmuster CN 2 601 426 Y einen Eingabestift, der an seiner Spitze einen druckempfindlichen Taster aufweist, mit dem der Eingabestift mit einer Unterlage in Berührung gebracht werden kann, wobei der Taster den Eingabestift bei der Berührung mit der Unterlage in einem aktiven Zustand schaltet. Ebenfalls an der Spitze in unmittelbarer Nähe des Tasters ist ein optischer Bewegungssensor mit einem Sichtfenster angeordnet, durch das Licht auf die Unterlage ausgestrahlt und wieder als reflektiertes Licht empfangen werden kann, wobei eine Bewegung des Eingabestifts aufgenommen wird. Darüber hinaus weist der Eingabestift eine Signaleinrichtung auf, mittels der er Signale, beispielsweise Bewegungsdaten des optischen Bewegungssensors und/oder von dem Taster ermittelte Druckunterschiede an einen speziell dafür eingerichteten Empfänger übermitteln kann. Der Eingabestift funktioniert im Wesentlichen wie eine drahtlose optische Maus eines herkömmlichen Computers.

### Der Erfindung zugrundeliegende Aufgabe

Der Erfindung liegt die Aufgabe zugrunde, eine verbesserte Vorrichtung bzw. ein System zur Eingabe von Anweisungen an einen Reinigungsroboter bereitzustellen, das intuitiv, interaktiv und somit benutzerfreundlicher zu bedienen ist und gleichzeitig bei hoher Effektivität und Effizienz kostengünstiger herstellbar ist. Des Weiteren ist eine Aufgabe der Erfindung, ein zuverlässiges und flexibles Verfahren zum Steuern und Programmieren eines Reinigungsroboters bereitzustellen.

### Erfindungsgemäße Lösung

Die Lösung der gestellten Aufgabe gelingt mittels einer Teach-In-Vorrichtung für einen Reinigungsroboter gemäß Anspruch 1. Die erfindungsgemäße Teach-In-Vorrichtung umfasst dabei ein Gehäuse, eine Signaleinrichtung, die in dem Gehäuse angeordnet und eingerichtet ist, vorbestimmte Daten-Signale auszusenden, die von einer Empfangseinrichtung eines Reinigungsroboters empfangen werden können, und eine Steuerungseinrichtung, die in dem Gehäuse angeordnet und eingerichtet ist, die vorbestimmten Daten-Signale der Signaleinrichtung einzustellen, beziehungsweise auszuwählen. Um eine gezielte Auslösung der Daten-Signale zu gestatten umfasst die Teach-In-Vorrichtung einen Bodensensor, der eingerichtet ist, die Signaleinrichtung zu aktivieren oder deren Zustand zu ändern, wenn der Bodensensor einen Berührung zum Boden hatoder den Boden berührt bzw. diesen abtastet. Dadurch erfolgt eine Übertragung der Daten-Signale gezielt, wenn ein bestimmter Bereich oder Bodenabschnitts mittels der Teach-In-Vorrichtung abgegrenzt wird, beziehungsweise abgetastet wird. Beim Abtasten beziehungsweise Abgrenzen des Bereichs ist die Teach-In-Vorrichtung vorwiegend in Berührung mit dem Boden, d.h., dass kurze berührungslose Momente durch eine Latenzzeit der Reaktionszeit der Teach-In-Einrichtung überbrückt werden können. Darüber hinaus ist es auf einfache Art und Weise möglich, mit der Teach-In-Vorrichtung Bereiche derart aufzuzeichnen bzw. abzugrenzen, dass Schnittflächen gebildet werden können, die angeben bzw. vorgegeben in welcher Richtung beispielsweise ein Teppich aufgefahren werden soll, um Fransen zu vermeiden oder wo sich Türschwellen befinden, um an solchen Stellen die Hinderniserkennung eines Reinigungsroboters schwächer einzustellen und dessen Steigfähigkeit zu erhöhen. Folglich ist die Teach-In-Vorrichtung wesentlich flexibler einsetzbar als herkömmliche Abgrenzungs- oder Eingrenzungsmöglichkeiten.

Berühren wird im Sinne der Erfindung verstanden als etwas, das mit dem Äußeren seines Körpers absichtlich mit etwas Fassbarem in Berührung kommt. Vorliegend berührt der Bodensensor mit seinem Äußeren den Boden. Des Weiteren wird im Sinne der Erfindung der Begriff Tasten als ein Versuch verstanden, Gegenstände einer Umgebung - im vorliegenden Fall den Boden - durch Berühren wahrzunehmen.

Mittels der Teach-In-Vorrichtung für den Reinigungsroboter ist es einem Benutzer möglich intuitiv und interaktiv einen von einem Reinigungsroboter speziell zu berücksichtigenden Wirkungsbereich ein- oder abzugrenzen und dadurch den Reinigungsroboter zu programmieren bzw. zu steuern. Insbesondere wird mittels der Teach-In-Vorrichtung eine besonders flexible Programmierung bzw. Steuerung des Reinigungsroboters möglich. Durch "Abgrenzen" bzw. "Eingrenzen" eines bestimmten Bereichs wird im Sinne der Erfindung ein Aufzeichnen bzw. Abtasten eine Umfangslinie einer Fläche auf einem zu reinigenden Boden mittels der Teach-In-Vorrichtung verstanden. Dadurch können dem abgegrenzten Bereich zusätzlich bestimmte Eigenschaften und Informationen zugeordnet werden, die anhand vorbestimmter Daten-Signale an eine Empfangseinrichtung des Reinigungsroboters weitergegeben werden. Diese Extra-Informationen und - Eigenschaften können mittels der Steuerungseinrichtung der Teach-In-Vorrichtung eingestellt werden. Dadurch kann beispielsweise ein zu reinigender Bereich abgegrenzt bzw. ein nicht zu reinigender Bereich ausgegrenzt werden. Ferner kann eingestellt werden, ob der zu reinigende Bereich besonderes zu behandeln ist, weil er beispielsweise stark verschmutzt ist oder einen bestimmten Bodenbelag aufweist, der ein besonders Reinigungsprogramm erforderlich macht. Dabei ist die Anzahl der mit der Teach-In-Vorrichtung abgegrenzten Flächenbereiche nicht limitiert oder festgelegt. Eine Veränderung auf der abgegrenzten Fläche bzw. dem zu reinigenden Boden ist nicht notwendig - wie dies beispielsweise bei Magnetbändern oder durch Aufstellen von Infrarot-Leuchttürmen notwendig gewesen wäre. Die Programmierung erfolgt in der "realen Welt" anstatt zum Beispiel auf einer Orts-Koordinaten-Karte eines Tablet-PCs.

Ein weiterer Aspekt der Erfindung betrifft ein Teach-In-System mit einer Teach-In-Vorrichtung und einem Reinigungsroboter, wobei der Reinigungsroboter umfasst: eine Ortungsvorrichtung zum Lokalisieren bzw. Erfassen und Ermitteln von Orts-Koordinaten einer Teach-In-Vorrichtung, zumindest eine Empfangseinrichtung, die eingerichtet ist, Daten-Signale der Teach-In-Vorrichtung zu empfangen, einen Speicher zum Speichern von Daten-Signalen und/oder Orts-Koordinaten der Teach-In-In-Vorrichtung, eine Verarbeitungseinheit zum Auswerten der Daten-Signale und/oder der Orts-Koordinaten, und eine Steuerungsvorrichtung zur Zuordnung von Tätigkeiten des Reinigungsroboters in Abhängigkeit der verarbeiteten Daten-Signale und/oder Orts-Koordinaten. Mittels eines solchen Teach-In-Systems ist eine Programmierung und Steuerung eines Reinigungsroboters besonders einfach. Die für die Teach-In-Vorrichtung geltenden Vorteile sind in gleicher Weise auf das Teach-In-System zu übertragen.

Noch ein weiterer Aspekt der Erfindung betrifft ein Verfahren zum Steuern eines Reinigungsroboters eines Teach-In-Systems. Dabei identifiziert eine Empfangseinrichtung - z.B. eines Reinigungsroboters - eine bestimmte Teach-In-Vorrichtung und empfängt Daten-Signale, die von der bestimmten Teach-In-Vorrichtung bereitgestellt werden. Gleichzeitig werden Orts-Koordinaten der Teach-In-Vorrichtung mittels einer Ortungsvorrichtung des Reinigungsroboters zum Zeitpunkt des Empfangs der Daten-Signale erfasst und ermittelt. In einem anschließenden Schritt erfolgt ein Zuordnen der Daten-Signale der Teach-In-Vorrichtung einer durchzuführenden Tätigkeit an der von der Ortungsvorrichtung des Reinigungsroboters ermittelten Orts-Koordinaten der Teach-In-Vorrichtung. Dadurch lässt sich auf einfache Weise einem bestimmten Bereich einer zu reinigenden Fläche oder einem Bodenbelags ein bestimmtes Reinigungsprogramm zuordnen und somit der Reinigungsroboter Programmieren und Steuern.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Gemäß einer vorteilhaften Ausführungsform der Teach-In-Vorrichtung sind die vorbestimmten Daten-Signale optische Signale und/oder Funksignale. Mittels solcher Signale lassen sich Daten schnell und zuverlässig übertragen, ohne audiovisuelle Irritationen bei einem Benutzer oder weiteren unbeteiligten Personen hervorzurufen. Die Übertragung erfolgt durch gerichtete oder ungerichtete elektromagnetische Wellen, wobei der Bereich des genutzten Frequenzbands je nach Anwendung und verwendeter Technik von wenigen Hertz bis hin zu mehreren 100 Tera Hertz - sichtbares Licht - variieren kann. Bekannte Beispiele sind Bluetooth, WLAN, ZigBee, NFC, Wibree oder WiMAX im Radiofrequenzbereich sowie IrDA und optischer Richtfunk, FSO im infraroten bzw. optischen Frequenzbereich.

Gemäß einer besonders vorteilhaften Ausführungsform der Erfindung sind die optischen Signale Infrarot- und/oder Laserstrahlen. Mittels solcher Strahlen können die gewünschten Daten-Signale schnell und für das Auge nicht sichtbar übertragen werden. Darüber hinaus erlauben sie eine hohe Daten-Dichte.

Vorteilhafterweise ist das Gehäuse der Teach-In-Vorrichtung zum Zweck der Übertragung von Infrarot- und/oder Laserstrahlen zumindest teilweise lichtdurchlässig ausgebildet. Beispielsweise ist es nicht notwendig, die Teach-In-Vorrichtung in irgendeiner bestimmten Weise zu einem Empfänger des Signals zu orientieren, wenn die Teach-In-Vorrichtung über ihren gesamten Umfang lichtdurchlässig ausgebildet ist. Beispielsweise als Teil einer Mantelfläche eines zylinderförmig ausgebildeten Gehäuses der Teach-In-Vorrichtung, wobei in radialer Richtung über den gesamten Umfang des zylinderförmigen Gehäuses ein lichtdurchlässiges Material vorgesehen ist.

Um vorbestimmte Daten-Signale mit diversen zusätzlichen Informationen zu ergänzen, ist die Steuerungseinrichtung eingerichtet, die vorbestimmten Daten-Signale manuell und/oder automatisch einzustellen. Beispielsweise kann die Steuerungseinrichtung in Form eines Modus-Wahlschalters ausgeführt sein, mit dem manuell spezifische Reinigungs-Programme und dergleichen ausgewählt werden können. Bei einer weiteren noch vorteilhafteren Ausführungsform werden die Daten-Signale von der Steuerungseinrichtung automatisch eingestellt. Dazu verfügt/umfasst die Teach-In-Vorrichtung beispielsweise über diverse Sensoren, die eine automatische Auswahl der Daten-Signale auslösen.

Bei einer vorteilhaften Ausführungsform der Teach-In-Vorrichtung umfasst der Bodensensor einen Drucksensor und/oder einen optischen Sensor und/oder einen kapazitiven Sensor und/oder einen induktiven Sensor. Je nach Art der Bodenbeschaffenheit oder der Anforderungen an eine Programmierung des Reinigungsroboters kann der Bodensensor mit einem oder mehreren Sensoren ausgerüstet sein. Dadurch kann die Teach-In-Vorrichtung selbstständig eine Bodenbeschaffenheit, einen Grad der Verunreinigung des Bodens und so weiter feststellen. Darüber hinaus ist es möglich, mit mindestens zwei Sensoren Plausibilitätskontrollen durchzuführen, die hinsichtlich einer Bestimmung der Bodenbeschaffenheit oder eines Verunreinigungsgrades des Reinigungsprogramms für den Reinigungsroboter getroffen werden.

Vorzugsweise ist der Bodensensor als Taster und/oder Schalter ausgebildet, um beim Berühren der Teach-In-Vorrichtung mit einem bestimmten Bodenbereich den Zustand der Signaleinrichtung zu aktivieren oder zu ändern. Dadurch kann eine Übertragung der Daten-Signale gezielt erfolgen und sichergestellt werden, wenn ein bestimmter Bereich oder Bodenabschnitts mittels der Teach-In-Vorrichtung abgegrenzt oder abgetastet wird.

Beim Abtasten beziehungsweise Abgrenzen des Bereichs mit einem Bodensensor der als Taster ausgebildet ist, ist die Teach-In-Vorrichtung vorwiegend in Berührung mit dem Boden, d.h., dass kurze berührungslose Momente durch eine Latenzzeit der Reaktionszeit der Teach-In-Einrichtung überbrückt werden können. Wenn allerdings größere Latenzzeiten überbrückt werden müssen oder eine ununterbrochenen Berührung des Bodens mit dem Bodensensor nicht erforderlich ist, beispielsweise dann wenn man einen Bodenbereich Ab- beziehungsweise Eingrenzen will, der gleichbleibende Bodeneigenschaften hat, kann ein fester Schaltzustand von Vorteil sein. Der Bodensensor kann demnach einzeln als Taster oder Schalter ausgebildet sein oder als eine Taster-Schalter-Kombination, die wahlweise durch eine bestimmte Druck- oder eine bestimmte Bedienungsweise der Teach-In-Vorrichtung ein- und wieder aus-geschaltet werden kann.

Im Sinne der Erfindung bleibt ein Schalter nach seiner Betätigung stabil in seinem Schaltzustand z. B. ein Rastschalter oder Wahl-Schalter der lediglich einen binären Zustand einnehmen kann. Dagegen kehren Taster im Sinne der Erfindung nach Wegnahme der Betätigung wieder in eine ursprüngliche Stellung beziehungsweise ihren ursprünglichen Zustand zurück.

Bei einer besonders vorteilhaften Ausführungsform der Teach-In-Vorrichtung weist die Teach-In-Vorrichtung die Form eines Stifts auf. Dieser Stift kann in seinen Abmessungen denen eines herkömmlichen Kugelschreibers entsprechen. Überdies ist er aufgrund seiner Größe auch benutzerfreundlich zu tragen bzw. zu verwenden und kann, wenn er nicht mehr gebraucht wird, leicht am Reinigungsroboter oder einer den Reinigungsroboter aufnehmenden Basisstation angebracht oder darin verstaut werden.

Um die Benutzerfreundlichkeit zusätzlich zu erhöhen, kann die Teach-In-Vorrichtung bzw. der Stift ein verlängerbares Element aufweisen, beispielsweise mit einer Teleskopschiene versehen sein, wodurch er verlängerbar ist und dadurch vom Benutzer leichter zu verwenden ist. Alternativ kann der Stift bzw. die Teach-In-Vorrichtung an einem Stab befestigt sein.

Bei einer vorteilhaften Ausführungsform des Teach-In-Systems umfasst die Ortungsvorrichtung zumindest einen Richtungs- und einen Entfernungssensor. Um die Position des Teach-In-Systems erfassen zu können, ist ein Richtungs- und ein Entfernungssensor ausreichend.

Bei einer weiteren Ausführungsform des Teach-In-Systems ist die Ortungsvorrichtung zum Ermitteln der Position der Teach-In-Vorrichtung außerhalb des Reinigungsroboters angeordnet. Eine solche Anordnung ist insbesondere dann von Vorteil, wenn die Räumlichkeiten stark verwinkelt sind und dadurch ein am Reinigungsroboter angeordnetes Ortungssystem dem Benutzer nicht mehr folgen kann. Dieses gilt auch, wenn in dem Raum, in dem die Bereiche mit einer Teach-In-Vorrichtung abgegrenzt werden, viele Hindernisse aufweist, die eine direkte Kommunikation bzw. Ortung der Teach-In-In-Vorrichtung nicht mehr zuverlässig ermöglicht/ermöglichen.

Bei einer besonders vorteilhaften Ausführungsform des Teach-In-Systems ist die Ortungsvorrichtung als Teil einer Navigationseinrichtung des Reinigungsroboters ausgebildet. Eine Navigationsvorrichtung im Sinne der Erfindung ist ein technisches System, das mit Hilfe einer Positionsbestimmung - im vorliegenden Fall mittels eines Richtungs- und Entfernungssensors eine Zielführung zu einem gewählten Ort oder eine Route unter Beachtung bestimmter gewünschter Kriterien - Daten-Signale - ermöglicht. Bei einer solchen Ausführungsform bedarf es keiner zusätzlichen Ortungsvorrichtung beim Reinigungsroboter.

Bei einer vorteilhaften Ausführungsform ist das Teach-In-System in der Lage mittels der eigenen Navigationseinrichtung eine relative bzw. absolute Position des Reinigungsroboters bezüglich der Teach-In-Vorrichtung zu bestimmen. Je nachdem, ob sich der Reinigungsroboter an einem bestimmten, d.h. fixen Ort im Raum aufhält oder er bereits in Bewegung ist, kann er mittels seiner Navigationseinrichtung eine absolute Position bestimmen - wenn er sich an einem bekannten Referenzort befindet - oder eine relative Position, wenn er sich außerhalb des bekannten Referenzorts oder sich in Bewegung befindet. Dadurch ist eine Orientierung des Reinigungsroboters und Ortung der Teach-In-Vorrichtung immer gewährleistet.

Bei einer weiteren vorteilhaften Ausführungsform des Teach-In-Systems ist die Navigationseinrichtung ausgebildet, eine relative Position des Reinigungsroboters mittels einer vorgegebenen Karte seines Wirkungsumfelds zu bestimmen. Der Reinigungsroboter verfügt demnach bereits über eine Aufstellung der Orts-Koordinaten des Umfelds bzw. aller Flächen, die es zu reinigen gilt. Mittels der Teach-In-Vorrichtung werden demnach nur Bereiche innerhalb einer dem Reinigungsroboter bereits bekannten Karte bzw. einer Liste von Orts-Koordinaten an- bzw. vorgegeben. Die daraus resultierenden zu reinigenden oder zu ignorieren dem Flächenbereiche stellen demnach Schnittmengen der ermittelten Orts-Koordinaten der Teach-In-Vorrichtung mit Orts-Koordinaten der vorgegebenen Karte dar.

Im Sinne der Erfindung umfasst die Bezeichnung Reinigungsroboter auch alle autonom agierenden Staubsauger und alle Bauformen von Staubsaugern, einschließlich Kanisterstaubsauger, Stabstaubsauger, Tischstaubsauger und Upright-Sauger. Der Staubsauger kann ein Trocken- und/oder ein Nassstaubsauger sein und sowohl mit Staubbeuteln oder beutellos, z.B. nach dem Wirbelabscheideverfahren mit einer Staubabscheideeinheit arbeiten.

Eine zu reinigende Fläche im Sinne der vorliegenden Erfindung umfasst vorzugsweise eine Fläche von Bodenbelägen, die von Personen gewöhnlich mit den Füßen betreten wird, also beispielsweise ein Beton- oder ein Parkettboden, ein mit Platten, z.B. Steinplatten oder Keramikplatten belegter Boden oder ein mit Auslegeware, z.B. einem Teppich, Filz, oder elastischen Polymer wie etwa Neopren belegter Boden.

### Kurzbeschreibung der Zeichnungen

Weitere vorteilhafte Ausgestaltungen werden nachfolgend an Hand von in der Zeichnungen dargestellten Ausführungsbeispielen, auf welche die Erfindung jedoch nicht beschränkt ist, näher beschrieben.

Es zeigt schematisch:

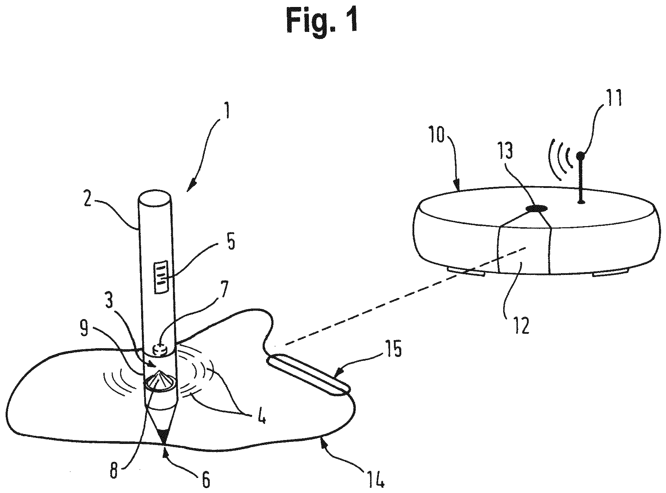

- Fig. 1: eine Teach-In-Vorrichtung gemäß einer vorteilhaften Ausführungsform zum Programmieren und Steuern eines Reinigungsroboters anhand eines Verfahrens gemäß einer vorteilhaften Ausführungsform.

Die Bezugszeichen in sämtlichen Ansprüchen haben keine einschränkende Wirkung, sondern sollen lediglich die Lesbarkeit der Ansprüche verbessern. Bei der nachfolgenden Beschreibung bevorzugter Ausführungsformen der vorliegenden Erfindung bezeichnen gleiche Bezugszeichen gleiche oder vergleichbare Komponenten.

### Ausführliche Beschreibung anhand von Ausführungsbeispielen

In Fig. 1 wird zur vereinfachten Erläuterung der Funktion einer Teach-In-Vorrichtung 1 und eines Verfahrens zum Programmieren eines Reinigungsroboters 10 mittels der Teach-In-in-Vorrichtung 1 dargestellt, dass sowohl die Teach-In-Vorrichtung 1 als auch der Reinigungsroboter 10 im Zusammenspiel als Teach-In-System zeigt. Die Teach-In-Vorrichtung 1, dient einer genauen Abgrenzung bzw. Eingrenzung eines Bereichs 14, dem der Reinigungsroboter 10 bei seinem Betrieb, bzw. beim Reinigen, besondere Aufmerksamkeit schenken soll. So kann mittels der Teach-In-Vorrichtung 1 ein eingegrenzter Bereich 14 definiert werden, der besonders sorgfältig, intensiv, oder entsprechend eines bestimmten Reinigungsprogramms des Reinigungsroboters 10 zu behandeln ist. Ebenso kann ein abgegrenzter Bereich 14 als Bereich gekennzeichnet werden, der von dem Reinigungsroboter 10 ignoriert, d.h. nicht gereinigt werden soll. Bei dem von der Teach-In-Vorrichtung 1 ein- oder abgegrenzten Bereich 14 handelt es sich um eine zu reinigende Fläche bzw. einen Bodenbelag der im Wesentlichen eben verläuft. Mittels der Teach-In-Vorrichtung 1 lässt sich ein Bereich 14 mehrfach abgrenzen, so dass zum einen der zu reinigende im Bereich in einem ersten Schritt definiert wird und nachträglich beispielsweise ein Anfahrtsbereich 15 definiert wird, der dem Reinigungsroboter 10 vorgibt, an welcher Stelle sich ein Zugang zum abgegrenzten Bereich 14 befindet. Beispielsweise können so auch Flächen unterhalb eines Freischwinger-Stuhls gereinigt werden oder Bereiche unterhalb von Möbeln angefahren werden, bei denen eine Zufahrt nur von einem bestimmten Bereich der Fläche aus, unterhalb des Möbelstücks möglich ist. Dadurch gelingt es auf einfache Art und Weise eine besonders effektive Programmierung des Reinigungsroboters 10 vorzunehmen. Darüber hinaus interagiert ein Benutzer bei der Verwendung der Teach-In-Vorrichtung 1 intuitiv mit dem Reinigungsroboter 10.

Die in der Fig. 1 dargestellte Ausführungsform der Teach-In-Vorrichtung 1 weist ein Gehäuse 2 auf, das die Form eines Stiftes hat. Dabei entsprechen die Abmessungen des Gehäuses 2 in etwa den Abmessungen eines herkömmlichen Kugelschreibers oder Filzstiftes. Mittels der Teach-In-Vorrichtung 1 wird auf der zu reinigenden Fläche bzw. dem Bodenbelag ein Bereich abgegrenzt, indem - ähnlich dem Malen mit Kreide auf einem Boden - mit dem Stift bzw. der Teach-In-Vorrichtung 1 der Boden abgegrenzt bzw. abgetastet wird. Die Teach-In-Vorrichtung 1 kann zur Erleichterung des Abgrenzen des Bereichs 14 über eine teleskopischer Schiene - hier nicht gezeigt - verfügen, die eine Verlängerung des Stifts 1 bzw. der Teach-In-Vorrichtung 1 ermöglicht. Des Weiteren verfügt die Teach-In-Vorrichtung 1 über eine Signaleinrichtung 3 über die die Teach-In-Vorrichtung 1 Daten-Signale 4 an eine Empfangseinrichtung 11 des Reinigungsroboters 10 übertragen kann. Die Daten-Signale 4 enthalten zusätzliche Informationen über die Beschaffenheit des Bodens bzw. des Bodenbelags, und/oder eines Verschmutzungsgrades und dergleichen. Bei der vorliegenden dargestellten Ausführungsform werden die Daten-Signale 4 anhand optischer-Signale, nämlich von IR-Strahlen an den Reinigungsroboter 10 übertragen. Bei einer weiteren Ausführungsform der Erfindung können die übertragenen Daten-Signale Funk-Signale oder Laser-Strahlen sein. Die Übertragung mittels IR-Strahlen, d.h. Infrarot-Strahlen, ist besonders kostengünstig, da nur wenige Bauteile erforderlich sind und diese leicht zu beschaffen sind. Bei der vorliegenden Ausführungsform in Fig. 1 weist die Teach-In-Vorrichtung 1 eine IR-LED 7 auf, die ihr Licht auf einen Reflexionskegel 8 abstrahlt, der das Licht allseitig und radial zum Umfang des Gehäuses 2 reflektiert, damit dieses in alle Richtungen ausgebreitet werden kann. Bei einer bevorzugten Ausführungsform der Erfindung weist das Gehäuse umfangsseitig in Höhe des Reflexionskegels 8 eine lichtdurchlässige Wand 9 auf. Dadurch, dass sich das Licht in jede Richtung umfangsseitig ausbreiten kann, kann sichergestellt werden, dass die als Stift 1 ausgebildete Teach-In-Vorrichtung 1 nicht in eine bestimmte Richtung zum Reinigungsroboter 10 ausgerichtet werden muss, damit die Empfangseinrichtung 11 des Reinigungsroboters 10, die mittels IR-Strahlen übertragenen Daten-Signale 4 empfangen kann.

Um die Teach-In-Vorrichtung 1 besonders flexibel einsetzen zu können weist die in der Fig. 1 dargestellte Teach-In-Vorrichtung 1 des Weiteren eine Steuerungseinrichtung 5 auf, die in dem vorliegenden Ausführungsbeispiel als manueller Modus-Wahlschalter 5 ausgebildet ist. Je nach Bedarf kann ein Benutzer damit bestimmte Reinigungsprogramme auswählen. Die getroffene Wahl wird mittels der Daten-Signale 4 von der Teach-In-Vorrichtung 1 an den Reinigungsroboter 10 übermittelt. Bei einer besonders bevorzugten Ausführungsform weist die Teach-In-Vorrichtung 1 an der Berührungsstelle der Teach-In-Vorrichtung 1 mit dem Boden einen Bodensensor 6 auf. Im vorliegenden Ausführungsbeispiel entspricht der Bodensensor 6 der mit dem Boden in Berührung tretenden Stiftspitze der Teach-In-Vorrichtung 1. Der Bodensensor 6 ist eingerichtet, einen Zustand der Signaleinrichtung 3 zu aktivieren oder zu ändern, wenn der Bodensensor 6 Berührung zum Boden hat. Dabei kann der Bodensensor 6 zusätzlich oder alternativ über mehrere Sensoren verfügen, die eine Analyse des Verschmutzungsgrades bzw. des Bodenbelags erlauben, wobei dadurch automatisch eine Auswahl eines Reinigungsprogramms vorgenommen und an den Reinigungsroboter 10 übertragen werden kann. Bei einer weiteren vorteilhaften Ausführungsform erfolgt ein Abstrahlen der Daten-Signale 4 erst bei Berührung des Bodensensors 6 der Teach-In-Vorrichtung 1 mit dem Boden beim Abgrenzen des Bereichs 14 bzw. 15. Die Verwendung von mehr als einem Bodensensor 6 erlaubt auch sicherzustellen, dass das richtige Reinigungsprogramm ausgewählt wurde - das gilt für die manuelle Auswahl wie für die automatische Auswahl gleichermaßen, die Mittels des Bodensensors 6 getroffen wurde. Vorzugsweise ist der Bodensensor 6 als Taster und/oder Schalter ausgebildet, um beim Berühren des Bodens einen Zustand der Signaleinrichtung 3 zu aktivieren oder zu ändern. In Abhängigkeit einer Bodenbeschaffenheit werden durch die Signaleinrichtung 3 vorbestimmten Daten-Signale 4 ausgesandt, und der Steuerungseinrichtung 5 zur Programmierung des Reinigungsroboters 10 bereitgestellt. So lange der Bodensensor 6 mit dem Boden in Berührung steht ist der Taster in der Lage die Signaleinrichtung 3 zu aktivieren oder zu ändern. Dabei ist der Bodensensor 6 eingerichtet, auch kürzere berührungslose Latenzzeiten bei der Übertragung von Daten-Signalen 4 zu überbrücken. Sofern alternativ oder zusätzlich ein Schalter verwendet wird, kann dieser beispielsweise wie ein Kugelschreiber durch Ausübung eines bestimmten Drucks auf dem Bodensensor 6 ein-geschaltet werden und sendet so lange Daten-Signale 4 aus, bis durch erneute Ausübung eines bestimmten Drucks der Schalter aus-geschaltet wird. Dadurch kann sichergestellt werden, dass Bodenbereiche unterbrechungsfrei markiert werden können.

Um genaue Orts-Koordinaten des von der Teach-In-Vorrichtung 1 abgegrenzten Bereichs 14, 15 erfassen bzw. ermitteln zu können, verfügt der Reinigungsroboter 10 über eine Ortungsvorrichtung 12, mit deren Hilfe eine Position bzw. die Orts-Koordinaten der Teach-In-Vorrichtung 1 lokalisiert, d.h. erfasst und ermittelt werden kann/können. Bei der in der Fig. 1 dargestellten Ausführungsform ist die Ortungsvorrichtung 12 im Reinigungsroboter 10 integriert. Vorzugsweise ist die Ortungsvorrichtung 12 Teil einer Navigationseinrichtung 13 des Reinigungsroboters 10. Dadurch, dass die Navigationseinrichtung 13 bereits über eine Ortungsvorrichtung 12 verfügt, kann auf eine zusätzliche Ortungsvorrichtung 12 verzichtet werden, die nur dazu vorgesehen ist, die Teach-In-Vorrichtung 1 zu lokalisieren. Bei einer besonders bevorzugten Ausführungsform reicht zum Lokalisieren der Teach-In-Vorrichtung 1 eine Ortungsvorrichtung 12 aus, die einen Richtungs- und einen Entfernungssensor umfasst.

Eine Ortung beziehungsweise Lokalisierung der Teach-In-Vorrichtung 1 mittels der Ortungsvorrichtung 12 ist in Fig. 1 als gestrichelte Linie zwischen Teach-In-Vorrichtung 1 und Reinigungsroboter 10 angedeutet.

Der Reinigungsroboter 10 verfügt über einen Speicher zum Speichern von Daten-Signalen 4 und/oder erfassten Orts-Koordinaten der Teach-In-Vorrichtung 1. Des Weiteren verfügt der Reinigungsroboter 10 über eine Verarbeitungseinheit, mit deren Hilfe er die Daten-Signale 4 und/oder die erfassten und ermittelten Orts-Koordinaten verarbeitet. - nicht gezeigt Gemäß einer vorteilhaften Ausführungsform des Reinigungsroboters 10 ordnet eine Steuerungsvorrichtung des Reinigungsroboters 10 - hier nicht gezeigt - dem Reinigungsroboter 10 Tätigkeiten bzw. Aufgaben in Abhängigkeit der verarbeiteten Daten-Signale 4 und/oder der erfassten und ermittelten Orts-Koordinaten des abgegrenzten Bereichs 14 bzw. 15 zu. Die ermittelten Orts-Koordinaten der Teach-In-Vorrichtung 1 können eine relative oder absolute Position des Reinigungsroboters 10 bezüglich der Teach-In-Vorrichtung 1 darstellen. Die auf diese Art und Weise ermittelten Orts-Koordinaten bzw. Position/en der Teach-In-Vorrichtung 1 erlauben dem Reinigungsroboter 10 den abgegrenzten odereingegrenzten Bereich 14, 15 zu erkennen und entsprechend zu bearbeiten. Vorzugsweise weist der Reinigungsroboter 10 in einem Speicher seiner Navigationseinrichtung 13 eine Karte der gesamten zu reinigenden Fläche auf, mit deren Hilfe eine genaue Zuordnung des abgegrenzten Bereichs 14, 15 möglich ist. Somit kann der abgegrenzte Bereich 14, 15 einer speziellen Behandlung unterzogen werden. Bei einer weiteren vorteilhaften Ausführungsform des Reinigungsroboters 10, der im Zusammenspiel mit der Teach-In-Vorrichtung 1 ein Teach-In-System bildet, können Orts-Koordinaten-Karten der gesamten zu reinigenden Fläche dem Reinigungsroboter 10 über eine Schnittstelle eingegeben werden. Dadurch wird der Einsatz des Reinigungsroboters 10 bzw. des Teach-In-Systems noch flexibler und vielseitiger.

Der besondere Vorteil der oben genannten Ausführungsformen der Teach-In-Vorrichtung 1 bzw. des in einem Teach-In-System damit zusammenwirkenden Reinigungsroboters 10 liegt bei der intuitiven und interaktiven Programmierung durch den Benutzer in der realen Welt, anstatt beispielsweise auf einer Orts-Koordinaten-Karte, die auf einem Tablet-PC vorliegt. Dadurch ist das Teach-In-System auch noch besonders kostengünstig und effizient.

Die Ausführungsbeispiele des vorstehend beschriebenen Reinigungsroboters 10 und dessen Verfahren und System im Zusammenwirken mit dem Teach-In-Stift zu seiner Steuerung lassen sich insbesondere auch auf alle autonom agierenden Staubsauger und alle Bauformen von Staubsaugern, einschließlich Kanisterstaubsauger, Stabstaubsauger, Tischstaubsauger und Upright-Sauger übertragen oder stellen solche Geräte dar. Die Staubsauger können Trocken- und/oder Nassstaubsauger sein und sowohl mit Staubbeuteln oder beutellos, z.B. nach dem Wirbelabscheideverfahren mit einer Staubabscheideeinheit arbeiten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### BEZUGSZEICHENLISTE

- 1: Teach-In-Vorrichtung
- 2: Gehäuse
- 3: Signaleinrichtung
- 4: Daten-Signale / IR-Strahlen
- 5: Steuerungseinrichtung
- 6: Bodensensor
- 7: IR-LED
- 8: Reflexionskegel
- 9: lichtdurchlässige Wand
- 10: Reinigungsroboter
- 11: Empfangseinrichtung
- 12: Ortungsvorrichtung
- 13: Navigationseinrichtung
- 14: abgegrenzter Bereich
- 15: Anfahrts- bzw. Auffahrtsbereich

## Patentansprüche

1. Teach-In-Vorrichtung (1) für einen Reinigungsroboter (10), wobei die Teach-In-Vorrichtung (1) umfasst:
- ein Gehäuse (2),
- eine Signaleinrichtung (3), die in dem Gehäuse (2) angeordnet und eingerichtet ist vorbestimmte Daten-Signale (4) auszusenden, die von einer Empfangseinrichtung (11) eines Reinigungsroboters (10) empfangen werden können,
- eine Steuerungseinrichtung (5), die in dem Gehäuse (2) angeordnet und eingerichtet ist, die vorbestimmten Daten-Signale (4) der Signaleinrichtung (3) einzustellen, und
- einen Bodensensor (6) umfasst, der eingerichtet ist, einen Zustand der Signaleinrichtung (3) zu aktivieren oder zu ändern, wenn der Bodensensor (6) Berührung mit dem Boden hat,
**dadurch gekennzeichnet, dass**
die Teach-In-Vorrichtung (1) vorgesehen ist, um eine Umfangslinie zumindest einer Fläche auf dem Boden abzutasten.

2. Teach-In-Vorrichtung (1) nach Anspruch 1, **dadurch gekennzeichnet, dass** die vorbestimmten Daten-Signale (4) optische Signale und/oder Funk-Signale sind.

3. Teach-In-Vorrichtung (1) nach Anspruch 1 oder 2, **dadurch gekennzeichnet, dass** das Gehäuse (2) der Teach-In-Vorrichtung (1) zumindest teilweise lichtdurchlässig (9) ausgebildet ist.

4. Teach-In-Vorrichtung (1) nach einem der vorangegangenen Ansprüche, **dadurch gekennzeichnet, dass** die Steuerungseinrichtung (5) eingerichtet ist, die vorbestimmten Daten-Signale (4) manuell und/oder automatisch einzustellen.

5. Teach-In-Vorrichtung (1) nach einem der vorangegangenen Ansprüche, **dadurch gekennzeichnet, dass** der Bodensensor (6) einen Drucksensor und/oder einen optischen Sensor und/oder einen kapazitiven Sensor und/oder einen induktiven Sensor umfasst.

6. Teach-In-Vorrichtung (1) nach einem der vorangegangenen Ansprüche, **dadurch gekennzeichnet, dass** der Bodensensor (6) als Taster und/oder Schalter ausgebildet ist.

7. Teach-In-Vorrichtung (1) nach einem der vorangegangenen Ansprüche, **dadurch gekennzeichnet, dass** die Teach-In-Vorrichtung (1) die Form eines Stifts aufweist.

8. Teach-In-Vorrichtung (1) nach Anspruch 8, **dadurch gekennzeichnet**, der Stift mittels eines Elements verlängerbar ist.

9. Teach-In-System mit einer Teach-In-Vorrichtung (1) nach einem der vorangegangenen Ansprüche 1 bis 8 und einem Reinigungsroboter (10) der umfasst:
- eine Ortungsvorrichtung (12) zum Erfassen von Orts-Koordinaten der Teach-In-Vorrichtung (1),
- zumindest eine Empfangseinrichtung (2), die eingerichtet ist, Daten-Signale (4) der Teach-In-Vorrichtung (1) zu empfangen,
- einen Speicher zum Speichern von Daten-Signalen (4) und/oder Orts-Koordinaten der Teach-In-Vorrichtung (1),
- eine Verarbeitungseinheit zum Auswerten der Daten-Signale (4) und/oder der Orts-Koordinaten, und
- eine Steuerungsvorrichtung zur Zuordnung von Tätigkeiten des Reinigungsroboters (10) in Abhängigkeit der verarbeiteten Daten-Signale (4) und/oder Orts-Koordinaten der Teach-In-Vorrichtung (1).

10. Teach-In-System nach Anspruch 9, **dadurch gekennzeichnet, dass** die Ortungsvorrichtung (12) zumindest einen Richtungs- und einen Entfernungssensor umfasst.

11. Teach-In-System nach einem der Ansprüche 9 oder 10, **dadurch gekennzeichnet, dass** die Ortungsvorrichtung (12) zum Erfassen von Orts-Koordinaten der Teach-In-Vorrichtung (1) außerhaib des Reinigungsroboters (10) angeordnet ist.

12. Teach-In-System nach einem der Ansprüche 9 bis 11, **dadurch gekennzeichnet, dass** die Ortungsvorrichtung (12) Teil einer Navigationseinrichtung (13) des Reinigungsroboters (10) ist.

13. Teach-In-System nach Anspruch 12, **dadurch gekennzeichnet, dass** die Navigationseinrichtung (13) eingerichtet ist, eine relative und/oder absolute Position des Reinigungsroboters (10) bezüglich der Teach-In-Vorrichtung (1) zu bestimmen.

14. Teach-In-System nach Anspruch 13, **dadurch gekennzeichnet, dass** die Navigationseinrichtung (13) eingerichtet ist, die relative und/oder absolute Position des Reinigungsroboters (10) bezüglich der Teach-In-Vorrichtung (1) mittels einer vorgegebenen Karte seines Wirkungsumfelds zu bestimmen.

15. Verfahren zum Steuern eines Reinigungsroboters (10) eines Teach-In-Systems nach einem der vorangegangenen Ansprüche 9 bis 14 unter Verwendung einer Teach-In-Vorrichtung (1) gemäß einem der vorangegangenen Ansprüche 1 bis 8, wenn der Bodensensor (6) Berührung mit dem Boden hat, wobei das Verfahren folgende Schritte umfasst:
- Identifizieren der Teach-In-Vorrichtung (1) mittels der Empfangseinrichtung (12),
- Empfangen mittels der Empfangseinrichtung (12) von Daten-Signalen (4), die von der Teach-In-Vorrichtung (1) bereitgestellt werden,
- Erfassen und Ermitteln von Orts-Koordinaten der Teach-In-Vorrichtung (1) mittels der Ortungsvorrichtung (12) des Reinigungsroboters (10) zum Zeitpunkt des Empfangs der Daten-Signale (4),
- Auswerten der Daten-Signale (4) der Teach-In-Vorrichtung (1) mittels der Verarbeitungseinheit, und
- Zuordnen einer durchzuführenden Tätigkeit an der von der Ortungsvorrichtung (12) des Reinigungsroboters (10) ermittelten Orts-Koordinaten der Teach-In-Vorrichtung (1) in Abhängigkeit der verarbeiteten Daten-Signale (4) mittels der Steuerungsvorrichtung.

## Claims

1. Teach-in device (1) for a robot cleaner (10), wherein the teach-in device (1) comprises:
- a housing (2),
- a signalling facility (3), which is arranged in the housing (2) and configured to emit predetermined data signals (4), which can be received by a receiving facility (11) of a robot cleaner (10),
- a control facility (5), which is arranged in the housing (2) and configured to set the predetermined data signals (4) of the signalling facility (3), and
- comprises a floor sensor (6) which is configured to activate or change a state of the signalling facility (3) if the floor sensor (6) makes contact with the floor, **characterised in that**
- the teach-in device (1) is provided to scan a peripheral line of at least one surface on the floor.

2. Teach-in device (1) according to claim 1, **characterised in that** the predetermined data signals (4) are visual signals and/or radio signals.

3. Teach-in device (1) according to claim 1 or 2, **characterised in that** the housing (2) of the teach-in device (1) is embodied at least partially to be light-permeable (9).

4. Teach-in device (1) according to one of the preceding claims, **characterised in that** the control facility (5) is configured to set the predetermined data signals (4) manually and/or automatically.

5. Teach-in device (1) according to one of the preceding claims, **characterised in that** the floor sensor (6) comprises a pressure sensor and/or a visual sensor and/or a capacitive sensor and/or an inductive sensor.

6. Teach-in device (1) according to one of the preceding claims, **characterised in that** the floor sensor (6) is embodied as button and/or switch.

7. Teach-in device (1) according to one of the preceding claims, **characterised in that** the teach-in device (1) has the form of a pin.

8. Teach-in device (1) according to claim 8, **characterised in that** the pin can be extended by means of an element.

9. Teach-in system with a teach-in device (1) according to one of the preceding claims 1 to 8 and a robot cleaner (10) which comprises:
- a positioning device (12) for capturing position coordinates of the teach-in device (1),
- at least one receiving facility (2) which is configured to receive data signals (4) of the teach-in device (1),
- a storage unit for storing data signals (4) and/or position coordinates of the teach-in device (1),
- a processing unit for evaluating the data signals (4) and/or the position coordinates, and
- a control device for assigning activities of the robot cleaner (10) as a function of the processed data signals (4) and/or position coordinates of the teach-in device (1).

10. Teach-in system according to claim 9, **characterised in that** the positioning device (12) comprises at least a direction and/or a distance sensor.

11. Teach-in system according to one of claims 9 to 10, **characterised in that** the positioning device (12) for capturing the position coordinates of the teach-in device (1) is arranged outside of the robot cleaner (10).

12. Teach-in system according to one of claims 9 to 11, **characterised in that** the positioning device (12) is part of a navigation facility (13) of the robot cleaner (10).

13. Teach-in system according to claim 12, **characterised in that** the navigation facility (13) is configured to determine a relative and/or absolute position of the robot cleaner (10) with respect to the teach-in device (1).

14. Teach-in system according to claim 13, **characterised in that** the navigation facility (13) is configured to determine the relative and/or absolute position of the robot cleaner (10) with respect to the teach-in device (1) by means of a predetermined map of its operating environment.

15. Method for controlling a robot cleaner (10) of a teach-in system according to one of the preceding claims 9 to 14 using a teach-in device (1) according to one of the preceding claims 1 to 8, if the floor sensor (6) makes contact with the floor, wherein the method comprises the following steps:
- identifying the teach-in device (1) by means of the receiving device (12),
- receiving, by means of the receiving device (12), data signals (4), which are provided by the teach-in device (1),
- capturing and determining position coordinates of the teach-in device (1) by means of the positioning device (12) of the robot cleaner (10) at the point in time of receiving the data signals (4),
- evaluating the data signals (4) of the teach-in device (1) by means of the processing unit, and
- assigning an activity to be carried out at the position coordinates of the teach-in device (1) determined by the positioning device (12) of the robot cleaner (10) as a function of the processed data signals (4) by means of the control device.

## Revendications

1. Dispositif d'apprentissage (1) destiné à un robot nettoyant (10), dans lequel le dispositif d'apprentissage (1) comprend :
- un boîtier (2),
- un appareillage de signalisation (3), disposé dans le boîtier (2) et qui est configuré pour envoyer des signaux de données (4) prédéterminés, lesquels peuvent être réceptionnés par un appareillage de réception (11) d'un robot nettoyant (10),
- un appareillage de commande (5) disposé dans le boîtier (2) et configuré pour régler les signaux de données (4) prédéterminés de l'appareillage de signalisation (3), et
- un capteur du sol (6) configuré pour activer ou modifier l'état de l'appareillage de signalisation (3) quand le capteur du sol (6) entre en contact avec le sol,
**caractérisé en ce que**
le dispositif d'apprentissage (1) est prévu pour trouver sur le sol la présence d'une ligne périphérique d'au moins une surface.

2. Dispositif d'apprentissage (1) selon la revendication 1, **caractérisé en ce que** les signaux de données (4) prédéterminés sont des signaux optiques et/ou des signaux radio.

3. Dispositif d'apprentissage (1) selon la revendication 1 ou 2, **caractérisé en ce que** le boîtier (2) du dispositif d'apprentissage (1) est réalisé au moins partiellement pour être transparent (9).

4. Dispositif d'apprentissage (1) selon l'une des revendications précédentes, **caractérisé en ce que** l'appareillage de commande (5) est configuré pour régler manuellement et/ou automatiquement les signaux de données (4) prédéterminés.

5. Dispositif d'apprentissage (1) selon l'une des revendications précédentes, **caractérisé en ce que** le capteur du sol (6) comprend un détecteur de pression et/ou un détecteur optique et/ou un détecteur capacitif et/ou un détecteur inductif.

6. Dispositif d'apprentissage (1) selon l'une des revendications précédentes, **caractérisé en ce que** le capteur du sol (6) est réalisé en tant que bouton-poussoir et/ou commutateur.

7. Dispositif d'apprentissage (1) selon l'une des revendications précédentes, **caractérisé en ce que** le dispositif d'apprentissage (1) a la forme d'un crayon.

8. Dispositif d'apprentissage (1) selon la revendication 8, **caractérisé en ce que** le crayon peut être allongé au moyen d'un élément.

9. Système d'apprentissage comprenant un dispositif d'apprentissage (1) selon l'une des revendications précédentes 1 à 8 ainsi qu'un robot nettoyant (10), qui comprend:
- un dispositif de localisation (12) pour collecter les coordonnées locales du dispositif d'apprentissage (1),
- au moins un appareillage de réception (2) configuré pour réceptionner les signaux de données (4) du dispositif d'apprentissage (1),
- une mémoire destinée à la mémorisation de signaux de données (4) et/ou de coordonnées locales du dispositif d'apprentissage (1),
- une unité de traitement destinée à l'analyse des signaux de données (4) et/ou des coordonnées locales, et
- un appareillage de commande destiné à affecter des tâches du robot nettoyant (10) en fonction des signaux de données (4) et/ou des coordonnées locales traités du dispositif d'apprentissage (1).

10. Système d'apprentissage selon la revendication 9, **caractérisé en ce que** le dispositif de localisation (12) comprend au moins un détecteur de direction et un détecteur d'éloignement.

11. Système d'apprentissage selon l'une des revendications 9 ou 10, **caractérisé en ce que** le dispositif de localisation (12) destiné à la collecte de coordonnées locales du dispositif d'apprentissage (1) est situé à l'extérieur du robot nettoyant (10).

12. Système d'apprentissage selon l'une des revendications 9 à 11, **caractérisé en ce que** le dispositif de localisation (12) fait partie d'un appareillage de navigation (13) du robot nettoyant (10).

13. Système d'apprentissage selon la revendication 12, **caractérisé en ce que** l'appareillage de navigation (13) est configuré pour déterminer une position relative et/ou absolue du robot nettoyant (10) sur base du dispositif d'apprentissage (1).

14. Système d'apprentissage selon la revendication 13, **caractérisé en ce que** l'appareillage de navigation (13) est configuré pour déterminer la position relative et/ou absolue du robot nettoyant (10) sur base du dispositif d'apprentissage (1) au moyen d'une carte prédéfinie de son champ d'action.

15. Procédé de commande d'un robot nettoyant (10) d'un système d'apprentissage selon l'une des revendications précédentes 9 à 14 utilisant un dispositif d'apprentissage (1) selon l'une des revendications précédentes 1 à 8, quand le capteur du sol (6) entre en contact avec le sol, le procédé comprenant les étapes suivantes :
- identification du dispositif d'apprentissage (1) au moyen de l'appareillage de réception (12),
- réception, au moyen de l'appareillage de réception (12), de signaux de données (4), fournis par le dispositif d'apprentissage (1),
- collecte et détection de coordonnées locales du dispositif d'apprentissage (1) au moyen du dispositif de localisation (12) du robot nettoyant (10) au moment de la réception des signaux de données (4),
- analyse des signaux de données (4) du dispositif d'apprentissage (1) au moyen de l'unité de traitement, et
- affectation, au moyen de l'appareillage de commande et en fonction des signaux de données (4) traités, d'une tâche à réaliser aux coordonnées locales du dispositif d'apprentissage (1) détectées par le dispositif de localisation (12) du robot nettoyant (10).
